# EUROPEAN PATENT SPECIFICATION

(11) **EP 2 391 159 B1**
(45) Date of publication and mention of the grant of the patent: **19.06.2019**
(21) Application number: 10733253.8
(22) Date of filing: 25.01.2010
(51) Int. Cl.: H04W 24/10, H04W 56/00

(54) **METHOD AND USER EQUIPMENT FOR ADJUSTING TIME OFFSET**
VERFAHREN UND BENUTZERVORRICHTUNG ZUR ZEITVERSATZEINSTELLUNG
PROCÉDÉ ET ÉQUIPEMENT UTILISATEUR PERMETTANT UN AJUSTEMENT DU DÉCALAGE TEMPOREL

(30) Priority: 24.01.2009 CN 200910006604
(43) Date of publication of application: 30.11.2011
(73) Proprietor: Huawei Technologies Co., Ltd., Longgang District Shenzhen, Guangdong 518129 (CN)
(72) Inventor: SONG, Weiwei, Shenzhen Guangdong 518129 (CN); XIA, Yuan, Shenzhen Guangdong 518129 (CN); YU, Yinghui, Shenzhen Guangdong 518129 (CN); REN, Xiaotao, Shenzhen Guangdong 518129 (CN)
(74) Representative: Thun, Clemens
(86) International application number: PCT/CN2010/070346
(87) International publication number: WO 2010/083780

(56) References cited:
- CN-A- 1 466 285
- CN-A- 101 154 984
- US-A1- 2003 153 275
- US-A1- 2007 149 206
- US-A1- 2007 149 206
- TEXAS INSTRUMENTS: "Enabling Coordinated Multi - Point Reception", 3GPP DRAFT; R1-090285 ENABLING COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090107, 7 January 2009 (2009-01-07), XP050318209, [retrieved on 2009-01-07]
- HUAWEI ET AL: "Discussion on Timing Advance issue in CoMP & Text Proposal", 3GPP DRAFT; R1-090518 DISCUSSION ON TIMING ADVANCE ISSUE IN COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090119, 19 January 2009 (2009-01-19), XP050318406, [retrieved on 2009-01-19]
- HUAWEI ET AL: "Analysis on uplink/downlink time delay issue for distributed antenna system", 3GPP DRAFT; R1-084336 ANALYSIS ON UPLINK_DOWNLINK TIME DELAY ISSUE FOR DISTRIBUTED ANTENNA SYSTEM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050317611, [retrieved on 2008-11-04]

## Description

### FIELD OF THE INVENTION

The present invention relates to the field of computer and communications technologies, and in particular, to a method for adjusting Time Advance (TA) and a User Equipment (UE).

### BACKGROUND OF THE INVENTION

In a radio communication system, the Coordinated Multi-Point transmission (CoMP) technology is important means for improving overall performance of a cell and performance of a UE at the edge of the cell. Network nodes in a CoMP system include: an evolved NodeB (eNodeB) and one or more Access Points (APs). Multiple APs are scattered geographically and connected to one or more eNodeBs. Multiple APs may coordinate to transmit or receive data, and the coordinating APs may belong to the same eNodeB or different eNodeBs.

The relation between an AP and a conventional cell is: One cell includes one or more APs, namely, one or more APs serve the same UE.

Generally, a UE is served by one or more cells, which are called "serving cells". When multiple cells coordinate to serve a UE, the UE selects a cell as an anchor cell. On the eNodeB, each cell has a receiving window, which is called an Orthogonal Frequency Division Multiplexing (OFDM) receiving window. The OFDM receiving window includes a Cycle Prefix (CP) part and a data part, which correspond to the CP part and the data part of a sent signal respectively. The OFDM receiving window is used to receive a signal sent by the UE, and the OFDM receiving windows of all cells have the same windowing time. The UE selects one of the serving cells as a synchronization cell. Therefore, when an uplink signal sent by the UE arrives at the eNodeB, the start position of the received signal is synchronous with the windowing time.

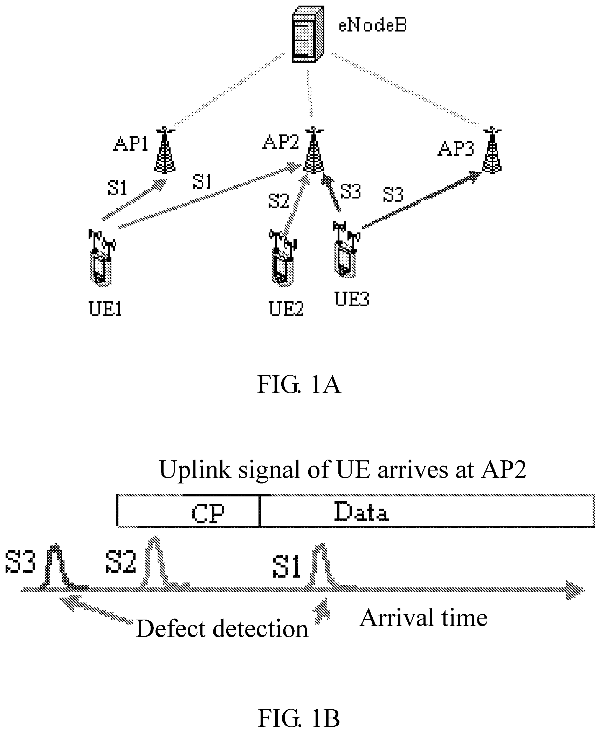

In the uplink direction, the UE performs uplink synchronization with only one of the serving cells of the UE (TA AP), but multiple cells serve the UE. The uplink signal of the UE arrives at the serving cell before, during or after the CP of the OFDM window of the serving cell. As shown in FIG. 1A and FIG. 1B, UE2 is served by AP2 only; and UE2 is synchronous with AP2. Therefore, when a signal S2 of UE2 arrives at AP2, the arrival time falls within the CP of the OFDM window of AP2. UE1 is served by both AP1 and AP2 simultaneously, and is synchronous with AP1 only. Because the distance between AP2 and UE1 is greater than the distance between AP1 and UE1, the time of signal S1 of UE1 arriving at AP2 may fall behind the CP of the OFDM window of AP2. UE3 is served by both AP2 and AP3 simultaneously, and is synchronous with AP3 only. Because the distance between AP2 and UE3 is smaller than the distance between AP3 and UE3, the time of signal S3 of UE3 arriving at AP2 may fall ahead of the CP of the OFDM window of AP2.

Generally, the system can tolerate a certain amount of time spread without impairing performance requirements. When the uplink signal falls within the CP of the OFDM receiving window of the serving cell, the time spread in the CP may be eliminated through simple processing of a receiver. When the uplink signal falls outside the CP of the OFDM receiving window of the AP corresponding to the serving cell, namely, falls ahead of or behind the CP of the OFDM receiving window, great inter-symbol crosstalk and inter-subcarrier interference will occur and the performance will deteriorate.

In the prior art, a current non-serving cell measures uplink signals received by a serving cell on a Physical Uplink Control Channel (PUCCH)/Physical Uplink Shared Channel (PUSCH)/Sounding Reference Signal (SRS)/Random Access Channel (RACH), and calculates the delay between the UE and the serving cell. The eNodeB selects the serving cell and adjusts the TA according to the calculated delay. Therefore, the UE can adjust the time of sending the uplink signal according to the TA adjustment signaling, so that the uplink signal sent by the UE can fall within the CP of the OFDM receiving window of the serving cell.

In the process of implementing the present invention, the inventors find at least the following problems in the prior art:
If at the time measuring an uplink signal of another serving cell, the non-serving cell sends data on this time-frequency resource too, the uplink signals of different cells collide; because the Reference Signal (RS) of one cell is not orthogonal to the RS of another cell, the detection performance is low when the non-serving cell detects the uplink signal at the time of collision. Consequently, the measurement result of the non-serving cell is inaccurate, so that the eNodeB cannot adjust the TA accurately, and the uplink signal sent by the UE cannot arrive at the time which falls within the CP of the OFDM receiving window of the serving cell.

US 2007/149206 A1 provides a method and system for adjusting uplink transmission timing when sending an initial transmission to a target cell/Node-B of an evolved universal terrestrial radio access network (E-UTRAN) immediately after handover from a source cell/Node-B of the E-UTRAN.

Further, prior art document (published on 7.1.2009) "Enabling Coordinated Multi - Point Reception", 3GPP Draft; R1 - 090285, refers to a coordinated multi-point reception, and received signals from multiple cooperating units are combined and processed at a single location. In different instances, cooperating units can be separate eNodeBs, remote - radio units (RRUs), or relays.

Further, the prior art document (published on 19.1.2009) "Discussion on Timing Advance issue in CoMP & Text Proposal", 3 GPP draft, R1 - 090518 refers to an analysis of uplink timing advance adjustment issues in CoMP joint reception mode. Two schemes are proposed, wherein in a first scheme the UE adjusts the uplink timing advance to an anchor cell or the UE adjusts the uplink timing advance to the cell with a minimum transmission delay in a serving cell set.

Further, the prior art document (published on 4.11.2008) "Analysis on uplink/downlink time delay issue for distributed antenna system", 3GPP draft, R1 - 084336 refers to three options, wherein in a first option a same CP type is assigned for uplink and downlink, in a second option the extended CP is chosen for uplink and the normal CP is chosen for downlink, and in a third option, the extended EP is chosen for downlink and the normal CP is used for uplink.

### SUMMARY OF THE INVENTION

The invention is defined by the appended claims, with preferred embodiments set out in the dependent claims.

The embodiments of the present invention provide a method for adjusting TA and a UE so that an uplink signal sent by a UE can arrive at the time which falls within a CP of an OFDM receiving window of a serving cell and that the performance of signal detection is improved. The technical solution is as follows:

In a first aspect a method for adjusting a Time Advance, TA, performed by a Coordinated Multi-Point transmission, CoMP, system is provided comprising a user equipment, UE, an eNodeB and multiple access points, APs, each connected to the eNodeB, the multiple APs covering multiple serving cells serving the UE, the method comprising:
- measuring, by the UE, an arrival time of a first downlink signal of a first cell selected by the UE among the multiple serving cells and measuring, by the UE, an arrival time of a second downlink signal of a synchronization cell of the multiple serving cells configured by the eNodeB,
   and determining, by the UE, a time difference between the arrival time of the first downlink signal of the first cell and the arrival time of the second downlink signal of the synchronization cell by subtracting the arrival time of the second downlink signal from the arrival time of the first downlink signal, wherein the synchronization cell is a cell at which an arrival time of any signal sent from the UE to the synchronization cell falls within a Cyclic Prefix, CP, of an Orthogonal Frequency Division Multiplexing, OFDM, receiving window of the synchronization cell, thereby arriving at a synchronization between the synchronization cell and the UE, wherein the OFDM receiving window comprises the CP and a data part,
   wherein furthermore the synchronization cell and the first cell are synchronized, so that a sending time point of the first and second downlink signal is a same,
- determining, by the UE, whether one of a first or a second preset event is satisfied, wherein the first preset event is that the time difference is greater than an offset value, and the second preset event is that the time difference is less than (-1) × the offset value, wherein the offset value is the CP,
- in case of yes in step **b**.), reporting, by the UE, an identifier, ID, of the satisfied event and an absolute value of the time difference to the eNodeB,
- if the received ID of the satisfied event is an ID of the first preset event, determining, by the eNodeB, to increase the TA provided by the synchronization cell by the absolute value of the time difference, thereby arriving at an increased TA, so that uplink signals sent from the UE to an AP of the first cell arrive at the AP of the first cell within the CP,
   if the received ID of the satisfied event is an ID of the second preset event, determining, by the eNodeB, to decrease the TA provided by the synchronization cell by the absolute value of the time difference, thereby arriving at a decreased TA, so that the uplink signals sent from the UE to the AP of the first cell arrive at the AP of the first cell within the CP,
- receiving, by the UE, an TA determined in step **d**.) from the eNodeB, and determining, by the UE, the received TA as a TA for sending uplink data to the first cell.

In a second aspect a Coordinated Multi-Point transmission, CoMP, system is provided comprising a user equipment, UE, an eNodeB and multiple access points, APs, each connected to the eNodeB, the multiple APs covering multiple serving cells serving the UE, wherein the CoMP system is configured to perform any of the above methods.

Further implementation forms can be provided in the dependent claims.

In the embodiments of the present invention, the UE measures the downlink delay information of the cell, and the TA of the uplink data is adjusted according to the downlink delay information measured by the UE. Because the result of the measurement performed by the UE is accurate, the TA can be adjusted accurately, so that the uplink signal can arrive at the time which falls within the CP of the OFDM receiving window of the serving cell, the performance of signal detection is improved, and the interference to other surrounding UEs is reduced.

### BRIEF DESCRIPTION OF THE DRAWINGS

FIG. 1A a schematic diagram of a CoMP system in the prior art;
FIG. 1B a schematic diagram of a location where an uplink signal falls in a cell in the prior art;
FIG. 2 is a flowchart of a method for adjusting TA according to an embodiment of the present invention;
FIG. 3 is a flowchart of another method for adjusting TA according to an embodiment of the present invention;
FIG. 4 is a flowchart of another method for adjusting TA according to an embodiment of the present invention; and
FIG. 5 a schematic structural diagram of a UE according to an embodiment of the
   present invention.

### DETAILED DESCRIPTION OF THE EMBODIMENTS

To make objectives, the technical solution, and merits of the present invention clearer, the following describes the embodiments of the present invention in more detail with reference to accompanying drawings.

For ease of description, the following embodiments of the present invention assume that one cell includes only one AP. Evidently, when one cell includes multiple APs, each AP is equivalent to a CoMP cell, and the embodiments of the present invention are also applicable.

### Embodiment 1

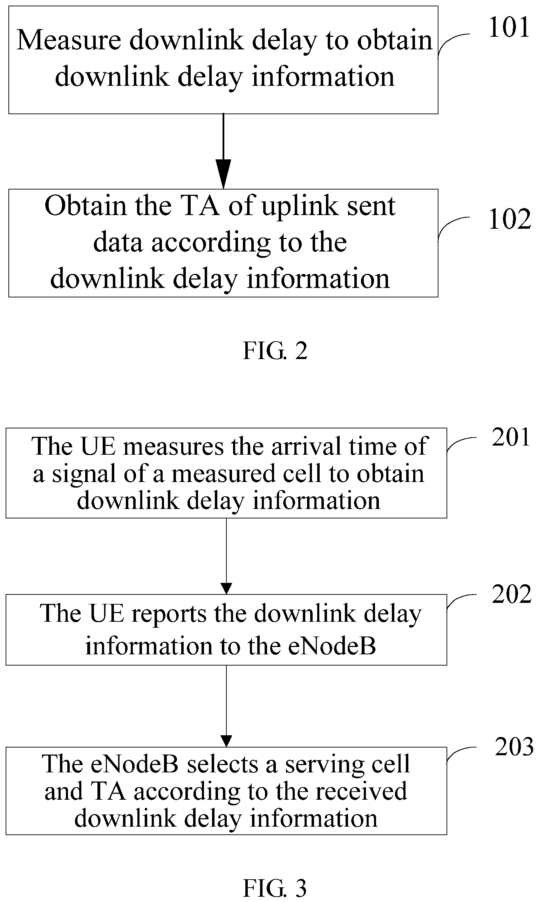

As shown in FIG. 2, an embodiment of the present invention provides a method for adjusting TA, which includes the following steps:
Step 101: Measure downlink delay to obtain downlink delay information.
Step 102: Adjust TA of uplink sent data according to the downlink delay information.

In this embodiment, a UE measures downlink delay information of a serving cell and a neighboring cell of the serving cell, and reports the downlink delay information to an eNodeB. The eNodeB adjusts TA of the uplink sent data according to the downlink delay information. Because the result of the measurement performed by the UE is accurate, the eNodeB can adjust the TA accurately, and the uplink signal can arrive at the time which falls within the CP of the OFDM receiving window of the serving cell; furthermore, the performance of signal detection is improved, and the interference to other surrounding UEs is reduced.

### Embodiment 2

As shown in FIG. 3, an embodiment of the present invention provides another method for adjusting TA, which includes the following steps:
Step 201: A UE measures arrival time of a signal of a measured cell to obtain downlink delay information.

Specifically, two different measurement modes are applicable. For the different measurement modes, the eNodeB may configure the UE by using dedicated signaling and/or a system message; or the UE may be configured without the eNodeB, and employs the default configuration. The configuration content includes measurement triggering modes and/or measurement parameters. The detailed measurement modes are as follows:
Mode 1: The UE measures arrival time of a signal of a measured cell periodically, and the measurement parameters include a measurement period.

In this mode, the UE measures the arrival time of the signal periodically according to the measurement period. The measurement period is obtained according to the measurement period of the signal quality such as RS Received Power (RSRP), RS Received Quality (RSRQ) and Path Loss (PL), and may be the same as the measurement period of the signal quality, or longer than or shorter than the measurement period of RSRP/RSRQ/PL. For example, the measurement period is integer times of or shorter than the measurement period of RSRP/RSRQ/PL. Therefore, the eNodeB may configure the length of the measurement period as required. The default case is that the measurement period is the same as the measurement period of RSRP/RSRQ/PL.

Mode 2: The eNodeB triggers the UE to measure arrival time of a signal of the measured cell, and the measurement parameters include a measurement period.

By analyzing information such as the current signal receiving quality of the UE, and whether the UE enables or disables the CoMP mode, the eNodeB determines whether to activate or deactivate the UE to measure the arrival time of the signal of the measured cell. For example, when discovering that the UE enables the CoMP mode and the quality of the uplink signal received from the UE is low, the eNodeB may activate the UE to measure the arrival time of the signal of the measured cell. Until discovering that the quality of the uplink signal received from the UE is high, the eNodeB deactivates the UE in measuring the arrival time of the signal of the measured cell. In another example, delay measurement is started before the CoMP mode is enabled, and the eNodeB deactivates the UE in measuring the arrival time of the signal of the measured cell when the UE disables the CoMP mode. In the period between activation and deactivation of the UE, the UE measures the arrival time of the signal of the measured cell periodically. The configuration of the measurement period is the same as that in mode 1.

Furthermore, as shown in Table 1, the eNodeB may add an information element such as Timedelay MeasConfig into the dedicated signaling and/or the system message, for example, into Measurement Configuration of a Radio Resource Control (RRC) connection reconfiguration message. The Timedelay MeasConfig is used to activate and deactivate delay measurement.

**Table 1**

| |
|---|
| MeasurementConfiguration field descriptions |
| MeasurementConfiguration field descriptions |
| ...... |
| TimedelayMeasConfig |
| Used to control activation/deactivation of time delay measurement |
| ...... |

In this embodiment of the present invention, each measurement period may further include one or more measurement intervals. The UE obtains a measured value of arrival time of a signal of the measured cell on the physical layer in every measurement interval, and filters all measured values through linear average or weighted average, and the filtered measured value is used as the measured value of the measurement period. Besides, the UE may apply no measurement interval, that is, measures one point only in each measurement period, and obtains the measured value, which is output directly without being filtered. The measurement interval is obtained according to the measurement interval of the signal quality, and may be to the same as the measurement interval of the signal quality, or longer than the measurement interval of RSRP/RSRQ/PL. For example, the measurement interval is integer times of or shorter than the measurement interval of RSRP/RSRQ/PL. Therefore, the eNodeB may configure the length of the measurement interval as required. The default case is that the measurement interval is the same as the measurement interval of RSRP/RSRQ/PL. When the measurement interval is different from the measurement interval of the signal quality, the UE needs to be notified through the dedicated signaling and/or the system message.

In this embodiment of the present invention, the measured objects of the delay measurement performed by the UE (namely, measured cells) break down into two types: The first type is the cell selected by the UE for measuring delay, which may be the same as the measured object of the signal quality, for example, a serving cell and a neighboring cell which may be probed on a frequency point of a measured object but is not forbidden to be measured; and the other type is the cell in the set of candidate serving cells (activated set). The set of candidate serving cells is a candidate set of serving cells, and the cells in this set satisfy the requirements of signal quality of a serving cell or the requirements of signal quality and delay of a serving cell. The cells in the set of candidate serving cells may be configured by the eNodeB receiving the measurement results of signal quality, or both signal quality and delay, which are reported by the UE; or, be configured and maintained by the UE according to the measurement results of signal quality, or both signal quality and delay. The information about the measured cell needs to be configured by the eNodeB through the dedicated signaling and/or the system messages. 1 bit may be used to indicate that the measured object of downlink delay is the same as the measured object of signal quality or is a cell in the set of candidate serving cells.

In this embodiment of the present invention, the UE selects the measured cell, and measures the arrival time of the signal of the measured cell to obtain downlink delay information in the following scenarios:

### (1) Downlink delay between the measured cell and the UE

The downlink delay is an absolute delay value, and is a difference between the time of sending a downlink signal from the measured cell and the time of the downlink signal arriving at the UE. For example, the UE measures the arrival time of the downlink data first, and then calculates the transmission time of the downlink data lasting from the sending and the arrival.

### (2) Difference between the downlink delay between the measured cell and the UE, and reference delay

The reference delay is downlink delay between a reference cell configured by the network side and the UE. For example, the UE measures the arrival time of downlink data of the measured cell and the delay reference cell respectively, and then calculates the transmission time of the downlink data lasting from being sent from the measured cell and the delay reference cell to the arrival respectively. The difference between the two transmission time values is used as a delay offset between the measured cell and the delay reference cell. If the sending time difference between the measured cell and the reference cell is known, the UE can obtain the delay offset between the measured cell and the delay reference cell directly through calculation according to the time difference between the arrival time of the downlink data of the measured cell and the arrival time of the downlink data of the reference cell and according to the sending time difference. When the measured cell is synchronous with the reference cell (namely, at this time, the sending time difference between the measured cell and the reference cell is 0), the UE may obtain the delay offset between the measured cell and the delay reference cell directly through calculation according to the time difference between the arrival time of the downlink data of the measured cell and the arrival time of the downlink data of the reference cell. The reference cell is configured by the eNodeB, and may be a cell closest to the UE, namely, a cell with the shortest path; or may be a synchronous cell or an anchor cell. The foregoing reference cell may be selected by the eNodeB flexibly according to different conditions.

Step 202: The UE reports the downlink delay information to the eNodeB.

Two different reporting modes are applicable. For the foregoing different reporting modes, the eNodeB may configure the UE by using the dedicated signaling and/or the system message; or the UE may be configured without the eNodeB, and uses the default configuration. The configuration content includes reporting triggering modes and/or reporting parameters. The detailed reporting modes are as follows:
Mode 1: The UE reports downlink delay information periodically, and the reporting parameters include: the reporting period of reporting the downlink delay information by the UE, and the cell number allowed to be reported.

The UE reports the downlink delay information obtained in step 201 to the eNodeB according to the configured reporting period. The number of report cells does not exceed the maximum cell number allowed by the eNodeB to be reported. When the number of measured cells exceeds the allowed number of report cells, the eNodeB needs to stipulate a reporting policy. For example, the cells are arranged in an ascending order of the delay offset between the cell and the reference cell, and measured results of cells of the allowed number of report cells which have a small delay offset to the reference cell are reported.

Mode 2: Measurement reporting event information is configured, and the downlink delay information is reported to the eNodeB according to the event information.

The reporting event information includes: a preset event, an identifier (ID) corresponding to the event, and an offset value corresponding to the event. When the measured result of the UE satisfies or triggers a measurement reporting event, the ID of the corresponding reporting event and the downlink delay information are reported.

The reported events break down into the following four types:
First reporting event C1: The difference between the delay of the measured cell and the delay of the synchronization cell exceeds the offset value.

That is, if the delay of the measured cell is T1, the delay of the synchronization cell is T2, and the offset value is offset 1, the first reporting event C1 needs to satisfy: T1 - T2 > offset 1.

The offset value may be a time length corresponding to the CP, or a time length determined by the eNodeB according to the TA adjustment algorithm and the CP length.

This event indicates that the uplink signal sent by the UE and received by the cell in the set of candidate serving cells will arrive at the time which falls behind the CP of the OFDM receiving window of the synchronization cell or CoMP cell, and the cell will be unable to serve the UE together with other cells without adjusting the TA.

Second reporting event C2: The difference between the delay of the measured cell and the delay of the synchronization cell is smaller than the offset value.

That is, if the delay of the measured cell is T1, the delay of the synchronization cell is T2, and the offset value is offset 2, the second reporting event C2 needs to satisfy: T2 - T1 > offset 2.

This event indicates that the uplink signal sent by the UE and received by the cell in the set of candidate serving cells will arrive at the time which falls ahead of the CP of the OFDM receiving window of the synchronization cell or CoMP cell, and the cell will be unable to serve the UE together with other cells without adjusting the TA.

Third reporting event C3: The difference between the delay of the measured cell and the delay of the configured shortest-path cell is smaller than the offset value.

That is, if the delay of the measured cell is T1, the delay of the shortest-path cell is T3, and the offset value is offset 3, the third reporting event C3 needs to satisfy: T3 - T1 > offset 3.

This event indicates that the cell closest to the UE changes with motion of the UE. According to the reporting event, the eNodeB selects a new cell of the shortest receiving path (namely, a cell whose downlink delay is less than a corresponding delay of forgoing shortest-path by one of the offset value) as a synchronization cell, and adjusts the TA of this UE.

In the third reporting event, the judgment about the signal quality of the measured cell may be added. When the delay satisfies the requirement of the third reporting event, the delay information of this cell is reported to the network side only if the signal quality of the measured cell satisfies some requirements. For example, when the delay of the measured cell satisfies the third reporting event C3, the delay information of the cell is reported to the network side only if the signal quality of the cell satisfies an absolute threshold or the signal quality of the cell is higher than the quality of the current shortest-path cell by one offset value, so as to ensure that the signal quality of the cell satisfies the requirements.

Fourth reporting event C4: The difference between the delay of the anchor cell and the delay of the shortest-path cell exceeds the offset value.

This event indicates that the anchor cell is far away from the UE, but the signal quality of the anchor cell is still high due to transmission power of cells and situation of geographical obstruction. If this cell continues to serve as an anchor cell, other neighboring cells close to the UE suffer strong uplink interference of this UE. According to this reporting event, the eNodeB may change the anchor cell and other serving cells, and use the cell close to the UE to serve the UE so as to reduce uplink interference to other cells.

Unlike the previous three reporting events, this reporting event C4 reports only occurrence of exception. In this case, the delay information of two cells may be reported, namely, the delay information of the anchor cell and the shortest-path cell. That is, both delay information of the shortest-path cell and the anchor cell configured by the eNodeB need to be reported. When a delay difference is to be reported, the difference value between the delay of the anchor cell and delay of the shortest-path cell is reported only.

For a triggering mode of event reporting, parameters relevant to the event reporting need to be configured by the eNodeB. The parameters include one or more of the following:
EventId, Cx-Threshold: event ID of the measurement event and relevant offset value (threshold);
Synchronization cell ID;
Anchor cell ID;
Shortest-path cell ID;
TA_CellTimedelay: synchronization cell delay;
FirstArrivingPathTimedelay: delay of the shortest receiving path, indicating whether the reference cell is unique, and, if the reference cell is unique, configuring which cell as the reference cell (synchronization cell, shortest delay cell, or anchor cell);
ReportQuantity: delay reporting quality, indicating that the delay measurement result of the cell reported by the UE may be an absolute delay value or a delay difference value obtained from comparison with the corresponding reference delay;
AdditionalReportQuantity: indicating that the UE may choose to additionally report signal quality of the cell while reporting delay information of the cell, where the reported signal quality may be RSRP, RSRQ, or PL, or any combination thereof; and
AdditionalReportCells: indicating that the information reported by the UE may carry information about the cells (set of cells), so as to help the eNodeB make a decision.

When the downlink delay information is reported, the UE may carry and report the signal quality of the cell that satisfies the delay reporting requirement, and/or signal quality and/or delay information of other relevant cells. For example, for the reporting events C1 and C2, when the information of the cells satisfying the conditions is reported, the relevant measurement results of other cells in the set of candidate serving cells may be chosen to be reported additionally; for the reporting event C3, the signal quality of the shortest-path cell configured by the eNodeB may be reported additionally.

The reported delay information may be in the following several forms:
(1) an absolute delay value between the UE and the cell; or
(2) a relative delay value according to the UE and the reference cell.

The reference cell for calculating the relative delay value may be unique. For example, in the periodical reporting, the reference cell may be a synchronization cell, anchor cell, or shortest-path cell; and the eNodeB may configure different reference cells for calculating the delay according to different events.

If the delay information is reported by means of event reporting, the reference cell may differ. For example, for the first reporting event C1 and the second reporting event C2, the eNodeB may configure the reference cell as the synchronization cell; for the third reporting event C3 and the fourth reporting event C4, the eNodeB may configure the reference cell as the shortest delay cell.

When the relative delay value is reported, if a unique reference cell is applied, the delay of the measured cell may be greater than or less than the delay of the reference cell. In this case, one bit is used to distinguish the relative delay. For example, the bit value "1" indicates that the reported result is greater than the delay of the reference cell, and the bit value "0" indicates that the reported result is less than the delay of the reference cell. If different reference cells are used to calculate the delay value, for example, as described above, different reference cells for calculating delay are configured according to different events, whether the delay value is a positive or negative value may not be distinguished, and the eNodeB may define the meaning of the value according to the relevant reported event. For example, the delay information reported by the C1 event is an absolute value by which the delay of the cell is greater than the delay of the synchronization cell; and the value reported by the C2 event is an absolute value by which the delay of the report cell is less than the delay of the synchronization cell.

Furthermore, in step 201, if the measured cell selected by the UE is a cell in the set of candidate serving cells, only C1 and C2 are reported; if the measured cell selected by the UE is the same as the measured object of signal quality, C1 to C4 may be reported, which increases actions and judgment to be made by the UE. C1 and C2 are critical to performance of the UE.

If measurement and reporting of delay are configured before the CoMP mode is enabled, as regards events C1 and C2, it is deemed that the current unique serving cell is the synchronization cell; as regards events C3 and C4, the anchor cell and the shortest-path cell are the current unique serving cell.

As regards the update signal quality measurement event of the set of candidate serving cells, once the signal quality of a neighboring cell satisfies a certain condition, the cell is triggered to join or quit reporting of the signal quality measurement result. For example, when the signal quality of a cell is higher than the weighted average of the signal quality of cells in the set of candidate serving cells by one threshold, the UE reports that the cell can join the set; when the signal quality of a cell is lower than the weighted average of the signal quality of cells in the set of candidate serving cells by one threshold, the UE reports that the cell can quit the set.

In the update event of the set of candidate serving cells, the threshold and the offset value are delay-related parameters. Condition 1, condition 2, a threshold corresponding to condition 1, and a threshold corresponding to condition 2 are pre-configured in the measurement event. Condition 1 is: The difference between the delay of the cell and the delay of the synchronization cell is less than a set offset value, for example, the offset value is CP and greater than 0. Condition 2 is: The difference between the delay of the cell and the delay of the synchronization cell is greater than a set offset value, for example, the offset value is CP or less than 0. The threshold corresponding to condition 1 may be a low threshold, and the threshold corresponding to condition 2 may be a high threshold. In the case of joining the reporting of the signal quality measurement result, if condition 1 is satisfied, the threshold corresponding to condition 1 is selected, for example, the threshold is decreased; otherwise, that is, if condition 2 is satisfied, the threshold corresponding to condition 2 is selected, for example, the threshold is increased. In the case of quitting the reporting of the signal quality measurement result, if condition 1 is satisfied, the threshold corresponding to condition 1 is selected, for example, the threshold is decreased; otherwise, that is, if condition 2 is satisfied, the threshold corresponding to condition 2 is selected, for example, the threshold is increased. For example, the eNodeB configures two values (threshold_high, threshold_low) for the threshold in the event of joining the set of candidate serving cells. If the difference between the delay of the measured cell and the delay of the synchronization cell is less than the set offset value, threshold_high is applied; if the difference between the delay of the measured cell and the delay of the synchronization cell is not less than the set offset value, threshold_low is applied. The method for quitting the set of candidate serving cells is the same as the foregoing. That is to say, delay may be used to determine the relevant thresholds of the event of updating the set of candidate cells. For example, if the difference between the delay of the measured cell and the delay of the synchronization cell is less than the set offset and greater than 0, it is easier for the measured cell satisfying the delay condition to join the set of candidate serving cells; if this cell already joins the set of candidate serving cells, it is more difficult for the cell to quit the set of candidate serving cells. Similarly, if the difference between the delay of the measured cell and the delay of the synchronization cell is greater than the set offset or less than 0, it is easier for the measured cell satisfying the delay condition to quit the set of candidate serving cells; definitely, if this cell does not join the set of candidate serving cells, it is more difficult for the cell to join the set of candidate serving cells.

It can be seen accordingly that, the foregoing threshold is only an exemplary value set according to the principles. In practice, the threshold may be set as other values as required. For example, in the case of joining the set of candidate serving cells, the threshold corresponding to condition 1 may be set as a high threshold, and the threshold corresponding to condition 2 may be set as a low threshold. The case of quitting the set of candidate serving cells is also similar, and is not repeated.

The foregoing threshold and/or the set offset value may be configured by the eNodeB by using the dedicated signaling and/or the system messages.

Step 203: The eNodeB selects the serving cell and the TA according to the received downlink delay information.

The TA is an amount of adjusted time.

In this embodiment of the present invention, it is assumed that a cell includes one AP. If a cell includes multiple APs, each AP is regarded as a CoMP cell, and the present invention can be still implemented. In another scenario, because the coverage of one cell is limited and the difference between delay of multiple APs should be very small, if the UE measures the delay of multiple APs under one cell respectively and performs filtering (averaging) on the measurement results on the multiple APs, the UE can obtain and report delay information of the cell. The AP is invisible to the UE, and the operation mode of the AP is still the same as that in the scenario that one cell includes one AP.

In this embodiment of the present invention, the UE measures the downlink delay of the cell, and sends the measured downlink delay information to the eNodeB; and the eNodeB calculates TA according to the downlink delay information measured by the UE, and sends the calculated TA to the UE so that the UE can adjust the TA of the uplink sent data. Because the result of the measurement performed by the UE is accurate, the TA can be adjusted accurately, the uplink signal can arrive at the time which falls within the CP of the OFDM receiving window of the serving cell, the performance of signal detection is improved, and the interference to other surrounding UEs is reduced.

### Embodiment 3

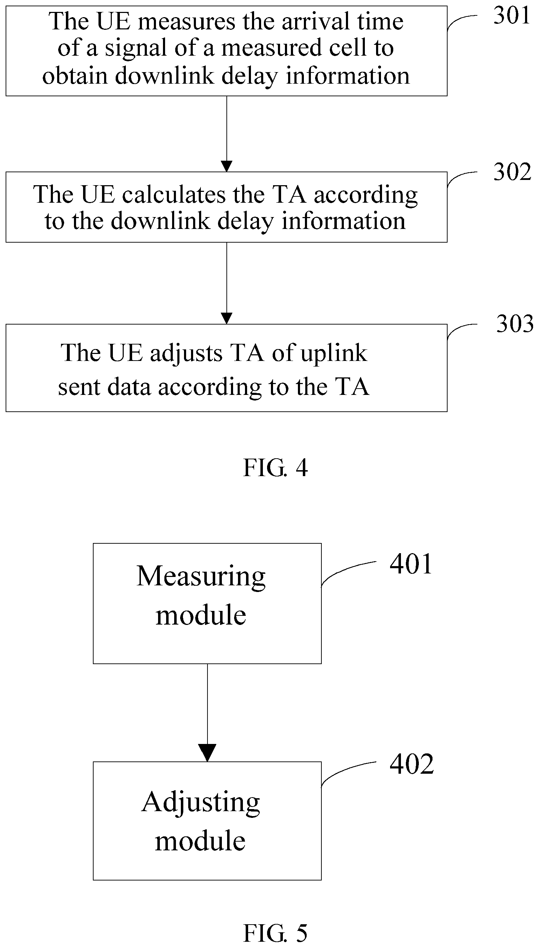

As shown in FIG. 4, the embodiment of the present invention provides another method for adjusting TA, which includes the following steps:
Step 301: A UE measures arrival time of a signal of a measured cell to obtain downlink delay information.

The specific content is the same as that in step 201, and is not repeated herein.

Step 302: The UE calculates TA according to the downlink delay information.

The UE may trigger the UE to adjust the TA according to a triggering TA adjustment event configured by an eNodeB.

The eNodeB configures the triggering TA adjustment event, relevant parameters, and UE measurement delay information for the UE. When the measurement result of the UE satisfies the condition stipulated by the triggering TA adjustment event, the event triggers the UE to adjust the TA automatically. The triggering TA adjustment events break down into the following two types:
First triggering TA adjustment event: If the difference between the delay of a neighboring cell and the delay of a cell of the shortest receiving path is less than an offset value, the UE may adjust the TA according to the delay of the cell of the shortest receiving path; and

Second triggering TA adjustment event: If the difference between the delay of an anchor cell and the delay of the cell of the shortest receiving path is greater than the offset value, the UE may adjust the TA according to the delay of the cell having the highest signal quality (for example, anchor cell) or the delay of the shortest receiving path.

In this embodiment, the eNodeB needs to configure the cell of the shortest receiving path initially. Afterward, the UE may update and maintain the cell of the shortest receiving path, or the eNodeB may notify the UE of updating the cell of the shortest receiving path.

The UE may calculate the TA according to the downlink delay information in the following way: The eNodeB configures an initial TA value for the UE and a cell based on which the initial TA value is obtained; according to the triggering TA adjustment event, the UE obtains a cell on which corresponding adjusting TA is based; the UE calculates a downlink delay difference (ΔT) between this cell and the cell which obtains the currently used TA (for example, the cell on which the initial TA value is based), and adds the ΔT value to the currently used TA to obtain new TA. Definitely, the TA may be calculated according to the downlink delay information directly in other modes such as by using an experimental formula.

The method of the eNodeB using the downlink delay information of the measured cell reported by UE to calculate the TA in embodiment 2 is similar to the calculation method enumerated in this embodiment, and is not repeated herein.

Step 303: After calculating TA, the UE may adjust TA of the uplink sent data according to the calculated TA, namely, adjust the time of sending data according to the calculated TA value.

Besides, in this embodiment, the UE may report the calculated TA value to the eNodeB, and the eNodeB decides whether to make adjustment. The UE reports the ID of the triggered event together with the adjusted TA value to the eNodeB, the network decides to make adjustment and sends a response or the adjusted TA value to the UE, and the UE makes the adjustment.

In this embodiment, the UE measures the downlink delay information of the cell, and calculates the TA according to the measured downlink delay information so as to adjust the TA of the uplink data. Because the result of the measurement performed by the UE is accurate, the TA can be adjusted accurately, the uplink signal can arrive at the time which falls within the CP of the OFDM receiving window of the serving cell, the performance of signal detection is improved, and the interference to other surrounding UEs is reduced.

### Embodiment 4

As shown in FIG. 5, the embodiment of the present invention provides a UE, which includes:
a measuring module 401, configured to measure arrival time of a downlink signal of a cell to obtain downlink delay information; and
an adjusting module 402, configured to adjust TA of uplink sent data according to the downlink delay information.

In this embodiment, the measuring module 401 may be implemented in two modes.

As a first implementation mode, the measuring module 401 includes:
a measurement information obtaining unit, configured to obtain measurement information which includes a measurement period; and
a first measuring unit, configured to measure the arrival time of the downlink signal of the cell within the measurement period.

The measurement information obtained by the measurement information obtaining unit further includes a delay measurement activation message and/or a delay measurement deactivation message.

The measuring module 401 not only includes the measuring unit for implementing the foregoing periodical measurement mode, but also includes:
an activating unit, configured to notify the measuring unit of measuring the arrival time of the downlink signal of the cell according to the delay measurement activation message; and
a deactivating unit, configured to notify the measuring unit of stopping measuring the arrival time of the downlink signal of the cell according to the delay measurement deactivation message.

In this embodiment of the present invention, the adjusting module 402 is implemented in three different modes.

As a first implementation mode, the adjusting module 402 includes:
a reporting unit, configured to report the downlink delay information to an eNodeB;
a receiving unit, configured to receive TA calculated according to the downlink delay information and returned by the eNodeB; and
an adjusting unit, configured to adjust the TA of the uplink sent data according to the calculated TA.

As an implementation mode, the reporting unit may include:
a first reporting information obtaining subunit, configured to obtain reporting information which includes a reporting period and an allowed number of report cells; and
a first reporting subunit, configured to report downlink delay information of report cells to the eNodeB within the reporting period, where the number of the report cells does not exceed the allowed number of report cells.

As another implementation mode, the reporting unit may also include:
a second reporting information obtaining subunit, configured to obtain reporting information which includes preset event information; and
a second reporting subunit, configured to report the downlink delay information to the eNodeB according to the preset event information.

As a second implementation mode, the adjusting module 402 includes:
a calculating unit, configured to calculate TA according to the downlink delay information; and
an adjusting unit, configured to adjust the TA of the uplink sent data according to the calculated TA.

As a third implementation mode, the adjusting module 402 includes:
a calculating unit, configured to calculate TA according to the downlink delay information;
a notifying unit, configured to notify the TA to the eNodeB to make the eNodeB adjust the calculated TA; and
an adjusting unit, configured to adjust the TA of the uplink sent data according to the TA adjusted by the eNodeB.

In the embodiments of the present invention, the UE measures the downlink delay information of the cell, and the TA of the uplink data is adjusted according to the downlink delay information measured by the UE. Because the result of the measurement performed by the UE is accurate, the TA can be adjusted accurately, the uplink signal can arrive at the time which falls within the CP of the OFDM receiving window of the serving cell, the performance of signal detection is improved, and the interference to other surrounding UEs is reduced.

All or part of the content in the technical solution according to the foregoing embodiments may be implemented through software, and the software is stored in a readable storage medium such as a computer hard disk, floppy disk, or CD-ROM.

The above descriptions are merely exemplary embodiments of the present invention, but are not intended to limit the scope of the present invention. Any modifications, variations or replacement that can be easily derived by those skilled in the art without departing from the scope of the invention shall fall within the protection scope of the present invention.

According to a first aspect of the invention, a method for adjusting Time Advance, TA, applicable to a system having multiple serving cells is provided, which comprises:
measuring, by a User Equipment, UE, arrival time of a downlink signal of a cell, and obtaining downlink delay information of the measured cell according to the arrival time of the downlink signal; and
adjusting TA of uplink sent data according to the downlink delay information.

In a first implementation form of the first aspect, the measuring the arrival time of the downlink signal of the cell comprises:
obtaining measurement information which comprises a measurement period, and measuring the arrival time of the downlink signal within the measurement period.

In a second implementation form of the first aspect,
the measurement information further comprises a delay measurement activation message and/or a delay measurement deactivation message; and
the measuring the arrival time of the downlink signal of the cell further comprises:
measuring the arrival time of the downlink signal of the cell according to the delay measurement activation message; and/or
stopping measuring the arrival time of the downlink signal of the cell according to the delay measurement deactivation message.

In a third implementation form of the first aspect, the downlink delay information comprises:
downlink delay between the measured cell and the UE, where the downlink delay is a difference between sending time and the arrival time of the downlink signal; or
a difference between the downlink delay between the measured cell and the UE, and reference delay, where the reference delay is downlink delay between a reference cell, configured by a network side, and the UE.

In a fourth implementation form of the first aspect, the adjusting the TA of the uplink sent data according to the downlink delay information comprises:
reporting the downlink delay information to an evolved NodeB, eNodeB; and
receiving TA calculated according to the downlink delay information and returned by the eNodeB, and adjusting the TA of the uplink sent data according to the calculated TA.

In a fifth implementation form of the first aspect, the reporting the downlink delay information to the eNodeB comprises:
obtaining reporting information which comprises a reporting period and an allowed number of report cells; and
reporting downlink delay information of measured cells to the eNodeB within the reporting period, where a number of measured cells does not exceed the allowed number of the report cells.

In a seventh implementation form of the first aspect, the reporting the downlink delay information to the eNodeB comprises:
obtaining reporting information which comprises preset event information; and
reporting the downlink delay information to the eNodeB according to the preset event information.

In an eighth implementation form of the first aspect,
the preset event information comprises: a preset event, an identifier of the preset event, and an offset value corresponding to the preset event;
the preset event comprises one or any combination of the following:
a difference between downlink delay of the measured cell and downlink delay of a synchronization cell of the UE is greater than the offset value corresponding to the preset event;
the difference between the downlink delay of the measured cell and the downlink delay of the synchronization cell of the UE is less than the offset value corresponding to the preset event;
a difference between the downlink delay of the measured cell and downlink delay of a shortest-path cell is less than the offset value corresponding to the preset event;
when the measured cell is an anchor cell, the difference between downlink delay of the anchor cell and the downlink delay of the shortest-path cell is greater than the offset value corresponding to the preset event;
signal quality of the measured cell satisfies a threshold, or a difference between the signal quality of the measured cell and signal quality of the shortest-path cell is greater than the offset value corresponding to the preset event; and
where the reporting the downlink delay information to the eNodeB according to the preset event information comprises:
   determining the preset event to be applied according to the identifier of the preset event; when the applied preset event is satisfied, reporting downlink delay information corresponding to that the applied preset event is satisfied to the eNodeB.

In a ninth implementation form of the first aspect, the adjusting the TA of the uplink sent data according to the downlink delay information comprises:
calculating TA according to the downlink delay information, and adjusting the TA of the uplink sent data according to the calculated TA.

In a tenth implementation form of the first aspect, the calculating the TA according to the downlink delay information comprises:
if a difference between downlink delay of a measured neighboring cell and downlink delay of a measured cell of a shortest receiving path is less than a first set offset value, calculating the TA according to the downlink delay of the cell of the shortest receiving path; and/or
if a difference between downlink delay of a measured anchor cell and the downlink delay of the measured cell of the shortest receiving path is greater than a second set offset value, calculating the TA according to downlink delay of a cell having the highest signal quality or the cell of the shortest receiving path.

In an eleventh implementation form of the first aspect, the adjusting the TA of the uplink sent data according to the downlink delay information comprises:
calculating TA according to the downlink delay information, and notifying the calculated TA to an evolved NodeB, eNodeB to make the eNodeB adjust the calculated TA; and
adjusting the TA of the uplink sent data according to the TA adjusted by the eNodeB.

According to a first aspect of the invention, a User Equipment, UE, is provided which comprises:
a measuring module, configured to: measure arrival time of a downlink signal of a cell, and obtain downlink delay information of the measured cell according to the arrival time of the downlink signal; and
an adjusting module, configured to adjust Time Advance, TA of uplink sent data according to the downlink delay information.

In a first implementation form of the second aspect, the measuring module comprises:
a measurement information obtaining unit, configured to obtain measurement information which comprises a measurement period; and
a measuring unit, configured to measure arrival time of the downlink signal of the cell within the measurement period.

In a second implementation form of the second aspect:
the measurement information obtaining unit, configured to obtain measurement information, whererin the measurement information further comprises a delay measurement activation message and/or a delay measurement deactivation message;
the measuring unit further comprises:
   an activating unit, configured to notify the measuring unit of measuring the arrival time of the downlink signal of the cell according to the delay measurement activation message; and/or
   a deactivating unit, configured to notify the measuring unit of stopping measuring the arrival time of the downlink signal of the cell according to the delay measurement deactivation message.

In a third implementation form of the second aspect, the adjusting module comprises:
a reporting unit, configured to report the downlink delay information to an evolved NodeB, eNodeB;
a receiving unit, configured to receive TA calculated according to the downlink delay information and returned by the eNodeB; and
an adjusting unit, configured to adjust the TA of the uplink sent data according to the calculated TA.

In a fourth implementation form of the second aspect, the reporting unit comprises:
a first reporting information obtaining subunit, configured to obtain reporting information which comprises a reporting period and an allowed number of report cells; and
a first reporting subunit, configured to report downlink delay information of measured cells to the eNodeB within the reporting period, where a number of the measured cells does not exceed the allowed number of the report cells;
or, the reporting unit comprises:
   a second reporting information obtaining subunit, configured to obtain reporting information which comprises preset event information; and
   a second reporting subunit, configured to report the downlink delay information to the eNodeB according to the preset event information.

In a fifth implementation form of the second aspect, the adjusting module comprises:
a calculating unit, configured to calculate TA according to the downlink delay information; and
an adjusting unit, configured to adjust the TA of the uplink sent data according to the calculated TA;
or, the adjusting module comprises:
   a calculating unit, configured to calculate TA according to the downlink delay information;
   a notifying unit, configured to notify the TA to the eNodeB to make the eNodeB adjust the calculated TA; and
   an adjusting unit, configured to adjust the TA of the uplink sent data according to the TA adjusted by the eNodeB.

According to a third aspect of the invention, a method for adjusting Time Advance, TA, applicable to a system having multiple serving cells is provided, which comprises:
receiving downlink delay information of a cell obtained and sent by a User Equipment, UE, where the downlink delay information of the cell is obtained by the UE according to measured and obtained arrival time of a downlink signal of the cell; and
calculating TA according to the downlink delay information; and
sending the calculated TA to the UE so that the UE adjusts TA of uplink sent data according to the calculated TA.

In a first implementation form of the third aspect, the downlink delay information comprises:
downlink delay between a measured cell and the UE, where the downlink delay is a difference between sending time and the arrival time of the downlink signal; or
a difference between the downlink delay between the measured cell and the UE, and reference delay, where the reference delay is downlink delay between a reference cell, configured by a network side and the UE.

In a second implementation form of the third aspect, the calculating the TA according to the downlink delay information comprises:
if a difference between downlink delay of a measured neighboring cell and downlink delay of a measured cell of the shortest receiving path is less than a first set offset value, calculating the TA according to the downlink delay of the cell of the shortest receiving path; and/or
if a difference between downlink delay of a measured anchor cell and the downlink delay of the measured cell of the shortest receiving path is greater than a second set offset value, calculating the TA according to downlink delay of a cell having the highest signal quality or the cell of the shortest receiving path.

According to a fourth aspect of the invention, an eNodeB for adjusting Time Advance, TA, applicable to a system having multiple serving cells is provided, which comprises:
means for receiving downlink delay information of a cell obtained and sent by a User Equipment, UE, where the downlink delay information of the cell is obtained by the UE according to measured and obtained arrival time of a downlink signal of the cell; and
means for calculating TA according to the downlink delay information; and
means for sending the calculated TA to the UE so that the UE adjusts TA of uplink sent data according to the calculated TA.

In a first implementation form of the fourth aspect, the downlink delay information comprises:
downlink delay between a measured cell and the UE, where the downlink delay is a difference between sending time and the arrival time of the downlink signal; or
a difference between the downlink delay between the measured cell and the UE, and reference delay, where the reference delay is downlink delay between a reference cell, configured by a network side and the UE.

In a second implementation form of the fourth aspect, the means for calculating the TA according to the downlink delay information comprises:
means for: if a difference between downlink delay of a measured neighboring cell and downlink delay of a measured cell of the shortest receiving path is less than a first set offset value, calculating the TA according to the downlink delay of the cell of the shortest receiving path; and/or
means for: if a difference between downlink delay of a measured anchor cell and the downlink delay of the measured cell of the shortest receiving path is greater than a second set offset value, calculating the TA according to downlink delay of a cell having the highest signal quality or the cell of the shortest receiving path.

## Claims

1. A method for adjusting a Time Advance, TA, performed by a Coordinated Multi-Point transmission, CoMP, system comprising a user equipment, UE, an eNodeB and multiple access points, APs, each connected to the eNodeB, the multiple APs covering multiple serving cells serving the UE, the method comprising:
**a.)** measuring (201), by the UE, an arrival time of a first downlink signal of a first cell selected by the UE among the multiple serving cells and measuring, by the UE, an arrival time of a second downlink signal of a synchronization cell of the multiple serving cells configured by the eNodeB,
and determining, by the UE, a time difference between the arrival time of the first downlink signal of the first cell and the arrival time of the second downlink signal of the synchronization cell by subtracting the arrival time of the second downlink signal from the arrival time of the first downlink signal,
wherein the synchronization cell is a cell at which an arrival time of any signal sent from the UE to the synchronization cell falls within a Cyclic Prefix, CP, of an Orthogonal Frequency Division Multiplexing, OFDM, receiving window of the synchronization cell, thereby arriving at a synchronization between the synchronization cell and the UE, wherein the OFDM receiving window comprises the CP and a data part, wherein furthermore the synchronization cell and the first cell are synchronized, so that a sending time point of the first and second downlink signal is a same,
**b.)** determining, by the UE, whether one of a first or a second preset event is satisfied, wherein the first preset event is that the time difference is greater than an offset value, and the second preset event is that the time difference is less than (-1) × the offset value, wherein the offset value is the CP,
**c.)** in case of yes in step **b.),** reporting, by the UE, an identifier, ID, of the satisfied event and an absolute value of the time difference to the eNodeB (202),
**d.)** if the received ID of the satisfied event is an ID of the first preset event, determining, by the eNodeB, to increase the TA provided by the synchronization cell by the absolute value of the time difference, thereby arriving at an increased TA, so that uplink signals sent from the UE to an AP of the first cell arrive at the AP of the first cell within the CP,
if the received ID of the satisfied event is an ID of the second preset event, determining, by the eNodeB, to decrease the TA provided by the synchronization cell by the absolute value of the time difference, thereby arriving at a decreased TA, so that the uplink signals sent from the UE to the AP of the first cell arrive at the AP of the first cell within the CP,
e.) receiving, by the UE, an TA determined in step **d.)** from the eNodeB, and determining, by the UE, the received TA as a TA for sending uplink data to the first cell.

2. The method according to claim 1, wherein the measuring the arrival time of the first downlink signal of the first cell comprises:
obtaining measurement information, which comprises a measurement period, and measuring the arrival time of the first downlink signal within the measurement period.

3. The method according to claim 2, wherein:
the measurement information further comprises a delay measurement activation message and/or a delay measurement deactivation message; and
the measuring the arrival time of the first downlink signal of the first cell further comprises:
measuring the arrival time of the first downlink signal of the first cell according to the delay measurement activation message; and/or
stopping measuring the arrival time of the first downlink signal of the first cell according to the delay measurement deactivation message.

4. A Coordinated Multi-Point transmission, CoMP, system comprising a user equipment, UE, an eNodeB and multiple access points, APs, each connected to the eNodeB, the multiple APs covering multiple serving cells serving the UE, wherein the CoMP system is configured to perform any of the methods according to claims 1 - 3.

## Patentansprüche

1. Verfahren zum Anpassen einer Zeitvoreilung, TA, die von einem System für eine koordinierte Mehrpunktübertragung, CoMP, durchgeführt wird, das eine Teilnehmereinrichtung, UE, einen eNodeB und mehrere Zugangspunkte, APs, von denen jeder mit dem eNodeB verbunden ist, umfasst, wobei die mehreren APs mehrere bedienende Zellen, die die UE bedienen, abdecken, wobei das Verfahren Folgendes umfasst:
**a.)** Messen (201) einer Ankunftszeit eines ersten Abwärtssignals einer ersten Zelle, die von der UE unter den mehreren bedienenden Zellen ausgewählt wird, durch die UE und Messen einer Ankunftszeit eines zweiten Abwärtssignals einer Synchronisationszelle der mehreren bedienenden Zellen, die vom eNodeB ausgelegt werden, durch die UE,
und Bestimmen einer Zeitdifferenz zwischen der Ankunftszeit des ersten Abwärtssignals der ersten Zelle und der Ankunftszeit des zweiten Abwärtssignals der Synchronisationszelle durch die UE durch Subtrahieren der Ankunftszeit des zweiten Abwärtssignals von der Ankunftszeit des ersten Abwärtssignals,
wobei die Synchronisationszelle eine Zelle ist, bei der eine Ankunftszeit eines beliebigen Signals, das von der UE an die Synchronisationszelle gesendet wird, in ein zyklisches Präfix, CP, eines Orthogonal Frequency Division Multiplexing(OFDM)-Empfangsfensters der Synchronisationszelle fällt und dadurch bei einer Synchronisation zwischen der Synchronisationszelle und der UE ankommt, wobei das OFDM-Empfangsfenster das CP und einen Datenteil umfasst,
wobei darüber hinaus die Synchronisationszelle und die erste Zelle synchronisiert sind, derart, dass ein Sendezeitpunkt des ersten und des zweiten Abwärtssignals ein selber ist,
**b.)** Bestimmen durch die UE, ob ein von einem ersten oder einem zweiten voreingestellten Ereignis erfüllt ist, wobei das erste voreingestellte Ereignis darin besteht, dass die Zeitdifferenz größer ist als ein Versatzwert, und das zweite voreingestellte Ereignis darin besteht, dass die Zeitdifferenz kleiner ist als (-1) x der Versatzwert, wobei der Versatzwert das CP ist,
**c.)** im Fall von ja in Schritt **b.)** Melden einer Kennung, ID, des erfüllten Ereignisses und eines Absolutwerts der Zeitdifferenz an den eNodeB durch die UE (202),
**d.)** wenn die empfangene ID des erfüllten Ereignisses eine ID des ersten voreingestellten Ereignisses ist, Bestimmen durch den eNodeB, die TA, die von der Synchronisationszelle bereitgestellt wird, um den Absolutwert der Zeitdifferenz zu erhöhen und dadurch bei einer erhöhten TA anzukommen, derart, dass Aufwärtssignale, die von der UE an einen AP der ersten Zelle gesendet werden, innerhalb des CP beim AP der ersten Zelle ankommen,
wenn die empfangene ID des erfüllten Ereignisses eine ID des zweiten voreingestellten Ereignisses ist, Bestimmen durch den eNodeB, die TA, die von der Synchronisationszelle bereitgestellt wird, um den Absolutwert der Zeitdifferenz zu verringern und dadurch bei einer verringerten TA anzukommen, derart, dass die Aufwärtssignale, die von der UE an den AP der ersten Zelle gesendet werden, innerhalb des CP beim AP der ersten Zelle ankommen,
**e.)** Empfangen einer TA, die in Schritt **d.)** bestimmt wurde, durch die UE vom eNodeB und Bestimmen der empfangenen TA als eine TA zum Senden von Aufwärtsdaten an die erste Zelle durch die UE.

2. Verfahren nach Anspruch 1, wobei das Messen der Ankunftszeit des ersten Abwärtssignals der ersten Zelle Folgendes umfasst:
Erhalten von Messinformationen, die eine Messperiode umfassen, und Messen der Ankunftszeit des ersten Abwärtssignals innerhalb der Messperiode.

3. Verfahren nach Anspruch 2, wobei:
die Messinformationen ferner eine Verzögerungsmessungsaktivierungsnachricht und/oder eine Verzögerungsmessungsdeaktivierungsnachricht umfassen und
das Messen der Ankunftszeit des ersten Abwärtssignals der ersten Zelle ferner Folgendes umfasst:
Messen der Ankunftszeit des ersten Abwärtssignals der ersten Zelle gemäß der Verzögerungsmessungsaktivierungsnachricht und/oder
Beenden des Messens der Ankunftszeit des ersten Abwärtssignals der ersten Zelle gemäß der Verzögerungsmessungsdeaktivierungsnachricht.

4. System für eine koordinierte Mehrpunktübertragung, CoMP, das eine Teilnehmereinrichtung, UE, einen eNodeB und mehrere Zugangspunkte, APs, von denen jeder mit dem eNodeB verbunden ist, umfasst, wobei die mehreren APs mehrere bedienende Zellen, die die UE bedienen, abdecken, wobei das CoMP-System dazu ausgelegt ist, eines der Verfahren nach Anspruch 1-3 durchzuführen.

## Revendications

1. Procédé de réglage d'une avance de temps (TA) réalisé par un système de transmission multipoint coordonnée (CoMP) comprenant un équipement d'utilisateur (UE), un noeud B évolué et de multiples points d'accès (AP) connectés chacun au noeud B évolué, les multiples AP couvrant de multiples cellules de desserte desservant l'UE, le procédé consistant à :
a) mesurer (201), par l'UE, un temps d'arrivée d'un premier signal en liaison descendante d'une première cellule sélectionnée par l'UE parmi les multiples cellules de desserte, et mesurer, par l'UE, un temps d'arrivée d'un second signal en liaison descendante d'une cellule de synchronisation des multiples cellules de desserte configurées par le noeud B évolué,
et déterminer, par l'UE, une différence de temps entre le temps d'arrivée du premier signal en liaison descendante de la première cellule et le temps d'arrivée du second signal en liaison descendante de la cellule de synchronisation en soustrayant le temps d'arrivée du second signal en liaison descendante du temps d'arrivée du premier signal en liaison descendante,
la cellule de synchronisation étant une cellule au niveau de laquelle un temps d'arrivée d'un signal quelconque envoyé par l'UE à la cellule de synchronisation tombe dans un préfixe cyclique (CP) d'une fenêtre de réception à multiplexage par répartition orthogonale de la fréquence (OFDM) de la cellule de synchronisation, de manière à obtenir une synchronisation entre la cellule de synchronisation et l'UE, la fenêtre de réception OFDM comprenant le CP et une partie données,
la cellule de synchronisation et la première cellule étant en outre synchronisées, de sorte qu'un point temporel d'envoi des premier et second signaux en liaison descendante soit le même ;
b) déterminer, par l'UE, si un événement parmi un premier et un second événement prédéfini est satisfait, le premier événement prédéfini étant que la différence de temps est supérieure à une valeur de décalage, et le second événement prédéfini étant que la différence de temps est inférieure à (-1) x la valeur de décalage, la valeur de décalage étant le CP ;
c) dans l'affirmative à l'étape b), signaler, par l'UE, un identifiant (ID) de l'événement satisfait et une valeur absolue de la différence de temps au noeud B évolué (202) ;
d) si l'ID reçu de l'événement satisfait est un ID du premier événement prédéfini, déterminer, par le noeud B évolué, d'augmenter la TA fournie par la cellule de synchronisation de la valeur absolue de la différence de temps, de manière à obtenir une TA augmentée, de sorte que des signaux en liaison montante envoyés par l'UE à un AP de la première cellule arrivent au niveau de l'AP de la première cellule pendant le CP,
si l'ID reçu de l'événement satisfait est un ID du second événement prédéfini, déterminer, par le noeud B évolué, de diminuer la TA fournie par la cellule de synchronisation de la valeur absolue de la différence de temps, de manière à obtenir une TA diminuée, de sorte que les signaux en liaison montante envoyés par l'UE à l'AP de la première cellule arrivent au niveau de l'AP de la première cellule pendant le CP ;
e) recevoir, par l'UE, une TA déterminée à l'étape d) en provenance du noeud B évolué, et déterminer, par l'UE, la TA reçue en tant que TA pour l'envoi de données en liaison montante à la première cellule.

2. Procédé selon la revendication 1, dans lequel la mesure du temps d'arrivée du premier signal en liaison descendante de la première cellule consiste à :
obtenir une information de mesure, qui comprend une période de mesure, et mesurer le temps d'arrivée du premier signal en liaison descendante pendant la période de mesure.

3. Procédé selon la revendication 2, dans lequel :
l'information de mesure comprend en outre un message d'activation de mesure de retard et/ou un message de désactivation de mesure de retard ; et
la mesure du temps d'arrivée du premier signal en liaison descendante de la première cellule consiste en outre à :
mesurer le temps d'arrivée du premier signal en liaison descendante de la première cellule selon le message d'activation de mesure de retard ; et/ou
arrêter la mesure du temps d'arrivée du premier signal en liaison descendante de la première cellule selon le message de désactivation de mesure de retard.

4. Système de transmission multipoint coordonnée (CoMP), comprenant un équipement d'utilisateur (UE), un noeud B évolué et de multiples points d'accès (AP) connectés chacun au noeud B évolué, les multiples AP couvrant de multiples cellules de desserte desservant l'UE, le système CoMP étant configuré pour réaliser l'un quelconque des procédés selon les revendications 1 à 3.
